# EUROPÄISCHE PATENTANMELDUNG

(11) **EP 1 365 310 A1**
(43) Veröffentlichungstag der Anmeldung: **26.11.2003**
(21) Anmeldenummer: 02011296.7
(22) Anmeldetag: 22.05.2002
(51) Int. Cl.: G06F 1/16, G06F 3/02

(54) **System aus einer Tastaturhalterung und einer Tastatur**

(71) Anmelder: Tektronix Berlin GmbH & Co. KG, 13629 Berlin (DE)
(72) Erfinder: Klimke, Jens, 14612 Falkensee (DE); Merz, Rudolf, 13589 Berlin (DE)
(74) Vertreter: Schurack, Eduard F.

(57) **Zusammenfassung**

System aus einer Tastaturhalterung (32) und einer Tastatur (30), wobei die Tastaturhalterung (32) U-förmig ausgebildet ist und die U-Form durch eine linke und eine rechte Seite und eine zwischen der linken und rechten Seite angeordnete Endseite gebildet ist, wobei die linke Seite der Tastaturhalterung (32) eine linke seitliche Führung (40) und die rechte Seite der Tastaturhalterung (32) eine rechte seitliche Führung (40) aufweisen, die mit der linken und der rechten Seite der Tastatur (30) zusammenwirken, so dass die Tastatur (30), um diese in den Transportmodus zu bringen, in die Führungen (40) eingeschoben werden kann. Sie betrifft weiterhin eine Tastaturhalterung und eine Tastatur für ein derartiges System.

## Beschreibung

Die vorliegende Erfindung betrifft ein System aus einer Tastaturhalterung und einer Tastatur, wobei die Tastaturhalterung U-förmig ausgebildet ist und die U-Form durch eine linke und eine rechte Seite und eine zwischen der linken und der rechten Seite angeordnete Endseite gebildet ist.

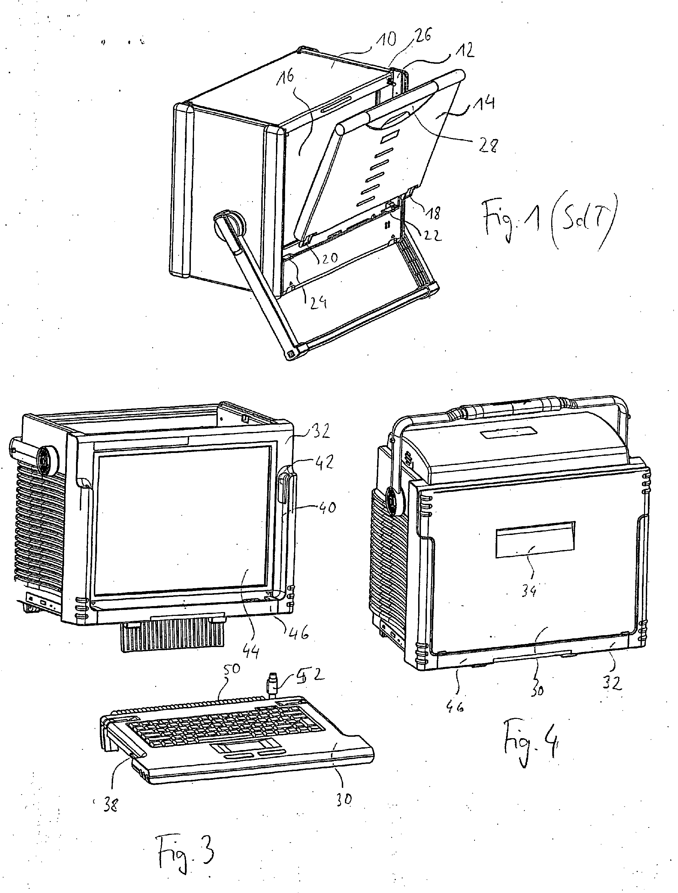

Ein derartiges System ist aus dem Stand der Technik bekannt und in Figur 1 dargestellt. Ein Informationsverarbeitungsgerät 10, beispielsweise ein Protokolltester, umfasst eine Tastaturhalterung 12 sowie eine Tastatur 14. Die Tastatur 14 kann zum Transport in einen sogenannten Transportmodus gebracht werden, in dem sie fest mit dem Informationsverarbeitungsgerät 10 verbunden ist. Zugleich deckt sie im Transportmodus ein Display 16 ab und schützt es dadurch. Um die Tastatur 14 zu bedienen, kann diese in einen Arbeitsmodus gebracht werden, das heißt von dem Informationsverarbeitungsgerät 10 abgenommen und vor dieses platziert werden. Um sie aus dem Arbeitsmodus wieder in den Transportmodus zu bringen, müssen zwei bewegliche Füße 18, 20, die im Arbeitsmodus der Tastatur 14 dazu dienen, diese an ihrem rückseitigen Ende für eine leichtere Bedienbarkeit zu erhöhen, in dafür vorgesehene Öffnungen 22, 24 der Tastaturhalterung 12 eingeführt werden. Nach dem Einführen der Füße 18, 20 wird die Tastatur 14 um die dadurch gebildete Drehachse rotiert, wobei ein Vorsprung 43 der Tastaturhalterung in eine dafür vorgesehene Vertiefung der Tastatur 14 eingreift und federnd gehalten wird. Dadurch wird ein ungewolltes Lösen der Tastatur 14, beispielsweise beim Transport, verhindert.

Zum Lösen der Tastatur 14 vom Vorsprung 43 ist vorgesehen, dass bei Anheben der Tastatur der Bereich 28 ausklappt und dadurch den Vorsprung 43 freigibt.

Der Nachteil dieser bekannten Lösung besteht darin, dass es aufgrund der Beweglichkeit der Füße 18, 20 umständlich ist, die Tastatur 14 in der Tastaturhalterung 12 zu befestigen. Einerseits müssen beide Füße 18, 20 gleich ausgerichtet sein, andererseits ist der Bereich der Öffnungen 22, 24 nur schwer einsehbar, so dass häufig mehrere Versuche nötig sind, um die Füße 18, 20 in die dafür vorgesehenen Öffnungen 22, 24 einzuführen. Insbesondere ergibt es sich häufig, dass beim Einführen die Füße 18, 20 aus ihrer gleichen Ausrichtung herausbewegt werden und der ganze Prozess wiederholt werden muss. Da die Füße 18, 20 keine Gewichtskräfte aufnehmen können, ohne sich dabei zu verstellen, kann die Tastatur 14 aufgrund der benötigten Schrägstellung nicht einhändig vom Arbeitsmodus in den Transportmodus überführt werden, da sonst der Vorsprung 43 im Wege ist. Durch den Vorsprung 43 besteht weiterhin die Gefahr, dass die Oberseite der Tastatur verkratzt oder beschädigt wird.

Die Aufgabe der vorliegenden Erfindung besteht deshalb darin, das eingangs genannte System derart weiterzubilden, dass eine einfachere Handhabung ermöglicht wird.

Diese Aufgabe wird gelöst durch ein System aus einer Tastaturhalterung und einer Tastatur mit den Merkmalen von Patentanspruch 1.

Die Erfindung basiert auf der Erkenntnis, dass sich die Tastatur nur mit einer Hand vom Arbeitsmodus in den Transportmodus überführen lässt, wenn Tastaturhalterung und Tastatur an ihren Seiten zusammenwirkende Führungen aufweisen. Dadurch ist ein Einschieben der Tastatur in die Tastaturhalterung in senkrechter Stellung und damit mit nur einer Hand möglich. Auch ist durch die erfindungsgemäße Maßnahme die Gefahr einer Beschädigung der Oberseite der Tastatur gering.

Bevorzugt umfasst mindestens eine seitliche Führung der Tastaturhalterung eine Vertiefung, in der ein seitlicher Vorsprung der Tastatur geführt werden kann. Insbesondere ist hierbei bevorzugt, wenn die linke und die rechte Seite der Tastatur zumindest in einem Bereich keinen seitlichen Vorsprung aufweisen, der ausgeht von der Rückseite der Tastatur. Durch diese Maßnahme wird ermöglicht, dass die Tastatur nicht exakt von oben in die Tastaturhalterung eingeschoben werden muss, sondern beispielsweise auf halber Höhe an die Tastaturhalterung herangeführt, angelehnt und gekippt werden kann. Dadurch ergibt sich eine einfache Justierung der Tastatur relativ zur Tastaturhalterung. Anschließend kann die Tastatur abgesenkt werden, um in sie in den Transportmodus zu bringen.

Bevorzugt weist mindestens eine seitliche Führung der Tastaturhalterung ein erstes Haltemittel, vorzugsweise einen federnden Schnappmechanismus, auf, der ausgebildet ist, mit einem Gegenpart der Tastatur zusammenzuwirken, um die Tastatur im Transportmodus gegen Herausrutschen aus der Tastaturhalterung zu sichern. Ein seitlich angebrachtes Haltemittel hat den Vorteil, dass bei Annäherung der Tastatur an die Tastaturhalterung keine Gefahr besteht, dass die Tastaturoberseite beschädigt wird. Gleichzeitig wird das Haltemittel automatisch beim Einschieben der Tastatur in die Tastaturhalterung aktiviert, ohne dass zusätzliche Maßnahmen durch die Bedienperson nötig wären.

Bei einer bevorzugten Ausführungsform ist das erste Haltemittel so ausgebildet, dass dieses durch Ziehen an der Tastatur in einer Richtung parallel zu den seitlichen Führungen gelöst werden kann. Dies ermöglicht eine sichere Verbindung zwischen Tastatur und Tastaturhalterung während des Transports und dennoch ein einhändiges Überführen der Tastatur vom Transportmodus in den Arbeitsmodus.

Die rechte oder die linke Seite der Tastatur kann ein zweites Haltemittel, vorzugsweise ebenfalls einen federnden Schnappmechanismus, aufweisen, der ausgebildet ist mit einem Gegenpart der Tastaturhalterung zusammenzuwirken, um die Tastatur im Transportmodus gegen Herausrutschen aus der Tastaturhalterung zu sichern.

Das erste und/oder das zweite Haltemittel umfassen bevorzugt einen federnd gelagerten Vorsprung und der jeweilige Gegenpart eine Vertiefung, in die der Vorsprung im Transportmodus gedrückt ist. Ein derartig angebrachter Vorsprung kann aufgrund seiner seitlichen Anordnung an der Tastatur und/oder der Tastaturhalterung keine Gefahr für die Oberfläche der Tastatur darstellen.

Die Tastaturhalterung ist bevorzugt derart ausgebildet, dass, wenn sich die Tastatur im Transportmodus befindet, ein Hohlraum zwischen der Tastaturhalterung und der Rückseite der Tastatur ausgebildet wird. Dieser Hohlraum ermöglicht die einfache Unterbringung eines Anschlusskabels der Tastatur an die Tastaturhalterung. Insbesondere kann vorgesehen sein, dass das Kabel der Tastatur für den Transport nicht von der Tastaturhalterung abgesteckt werden muss.

Es kann jedoch auch vorgesehen sein, dass im Bereich des Hohlraums ein Anschluss vorgesehen ist, um dort die Tastatur anzuschließen. Dies ermöglicht bei geringstem Aufwand den Austausch einer defekten Tastatur oder den Anschluss einer anderen Tastatur.

Der Hohlraum kann durch eine abnehmbare Abdeckung abdeckbar sein, was den Zugang zu einem Anschluss für die Tastatur oder einen anderen im Hohlraum angeordneten Anschluss erleichtert.

Die Tastaturhalterung kann ein Display aufweisen, das im Transportmodus der Tastatur von der Tastatur abgedeckt wird. Dadurch wird das Display auf einfachste Weise vor Beschädigungen geschützt.

Um die Tastatur einfach vom Arbeitsmodus in den Transportmodus und umgekehrt zu befördern, kann an der Unterseite der Tastatur ein vorzugsweise mittig auf der Unterseite der Tastatur angeordneter Griff vorhanden sein, mittels dessen die Tastatur, wenn sie sich im Transportmodus befindet, aus der Tastaturhalterung gezogen werden kann. Umgekehrt kann die Tastatur, wenn sie sich im Arbeitsmodus befindet, auf einfache Weise durch Verwendung dieses Griffs in den Transportmodus gebracht werden.

Bevorzugt weist die Tastatur in Querrichtung einen ersten Abschnitt mit einer ersten Breite auf, der im Transportmodus der Tastatur mit der rechten und der linken Seite der Tastaturhalterung in Kontakt ist und einen zweiten Abschnitt mit einer zweiten Breite, die größer ist als die erste Breite, der im Transportmodus der Tastatur mit der rechten und der linken Seite der Tastaturhalterung nicht in Kontakt ist. Mit anderen Worten entsteht dadurch auf der rechten und linken Seite der Tastatur jeweils ein Bereich, der nicht von der Führung der Tastaturhalterung verdeckt ist. Damit lässt sich die Tastatur, insbesondere bei Nichtvorhandensein des oben erwähnten Griffs, an der Unterseite der Tastatur auch beidhändig fassen, um sie vom Arbeitsmodus in den Transportmodus zu befördern und umgekehrt.

Die Rückseite der Tastatur kann mindestens ein drittes Haltemittel aufweisen, das mit einem vierten Haltemittel der Endseite der Tastaturhalterung und/oder der Abdeckung zusammenwirkt, um die Tastatur im Transportmodus vor einem Herausrutschen aus der Tastaturhalterung zu sichern. Wie bereits erwähnt, ermöglicht ein nur teilweise auf mindestens einer Seite der Tastatur vorgesehener Vorsprung ein einfaches Einführen der Tastatur in die Tastaturhalterung. Um die Tastatur dennoch auch in dem Bereich sicher mit der Tastatur an die Tastaturhalterung zu koppeln, in dem kein Vorsprung vorgesehen ist, können das erwähnte dritte und vierte Haltemittel vorgesehen sein.

Die vorliegende Erfindung betrifft weiterhin eine Tastaturhalterung für ein erfindungsgemäßes System wie eine Tastatur für ein erfindungsgemäßes System.

Weitere vorteilhafte Ausführungsformen ergeben sich aus den Unteransprüchen.

Im Nachfolgenden wird ein Ausführungsbeispiel unter Bezugnahme auf die beigefügten Zeichnungen ausführlicher dargestellt. Es zeigen:
- Figur 1: ein aus dem Stand der Technik bekanntes Informationsverarbeitungsgerät mit einem bekannten System aus Tastatur und Tastaturhalterung;
- Figur 2: in sequenzieller Darstellung die Überführung der Tastatur vom Transportmodus in den Arbeitsmodus bei einem erfindungsgemäßen System aus Tastaturhalterung und Tastatur;
- Figur 2e: einen vergrößerter Ausschnitt eines Schnappmechanismusses zum Sichern der Tastatur in der Tastaturhalterung;
- Figur 3: ein Informationsverarbeitungsgerät mit einem erfindungsgemäßen System aus Tastaturhalterung und Tastatur, wobei sich die Tastatur im Arbeitsmodus befindet; und
- Figur 4: das System aus Figur 3, wobei sich die Tastatur im Transportmodus befindet.

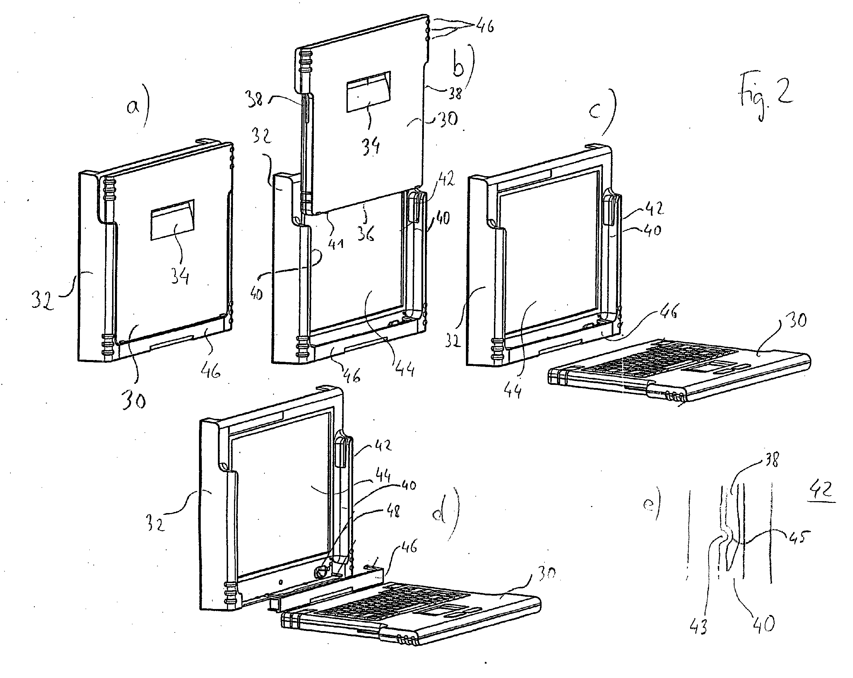

Figur 2a zeigt ein System aus einer Tastatur 30 und einer Tastaturhalterung 32, wobei sich die Tastatur 30 im Transportmodus befindet. An der Unterseite der Tastatur 30 ist mittig ein Griff 34 vorgesehen, um die Tastatur 30 aus der Tastaturhalterung zu ziehen. Figur 2b zeigt die Situation nach dem Anheben der Tastatur 30 aus der Tastaturhalterung 32. Die Tastatur 30 weist zwischen ihrer Rückseite 36 und etwa zwei Drittel ihrer Höhe eine erste Breite auf, die geringer ist als die zweite Breite der restlichen Tastatur 30. Seitlich ist ein Schwert 38 zu erkennen, das in einer entsprechenden Vertiefung der Tastaturhalterung geführt werden kann. Das Schwert 38 erstreckt sich nur im oberen Bereich des Teils der Tastatur 30, der die erste Breite aufweist. Im Bereich der seitlichen Führung 40 der Tastaturhalterung ist ein in Figur 2e detaillierter dargestellter, federnd gelagerter Schnappmechanismus 42 vorgesehen, der dazu dient, die Tastatur 30 nach Einführen in die Tastaturhalterung 32 gegen Herausrutschen zu sichern. Hierbei greift ein federnd gelagerter Vorsprung 43 der Tastaturhalterung 32 in eine entsprechende Vertiefung 45, die an der Tastatur 30 vorgesehen ist, ein. Die Federspannung ist so ausgelegt, dass durch Ziehen der Tastatur 30 nach oben Vorsprung 43 und Vertiefung 45 wieder voneinander gelöst werden können, um die Tastatur 30 wieder freizugeben. Wie Figur 2b weiterhin zu entnehmen ist, wird durch die Tastatur 30 im Transportmodus ein Display 44 der Tastaturhalterung 32 verdeckt. Die Tastatur 30 schützt damit im Transport das Display 44 vor Beschädigungen. An der Unterseite der Tastatur 30 sind mehrere Gummivorsprünge 46 vorgesehen, um die Tastatur 30 gegen Verrutschen zu sichern. Figur 2b zeigt weiterhin an der Unterseite der Tastatur 30 einen Vorsprung 41, der bei einer Tastatur 30 im Transportmodus hinter einer Abdeckung 46 angeordnet ist und somit ein Herausrutschen der Tastatur 30 aus der Tastaturhalterung 32 im Transportmodus zusätzlich verhindert. Figur 2c zeigt das System aus Tastatur 30 und Tastaturhalterung 32 im Arbeitsmodus, wobei aus Übersichtlichkeitsgründen das die Tastatur 30 mit der Tastaturhalterung 32 verbindende Spiralkabel weggelassen wurde. Figur 2d zeigt das System aus Tastatur 30 und Tastaturhalterung 32 ebenfalls im Arbeitsmodus, wobei eine Abdeckung 46 eines unteren Bereichs der Tastaturhalterung 32 abgenommen ist, um den Zugang zu Anschlüssen 48, die im Bereich der Abdeckung 46 angeordnet sind, zu erleichtern.

Figur 3 zeigt ein Informationsverarbeitungsgerät, beispielsweise einen Protokolltester, an dessen einer Seite die Tastaturhalterung 32 fest angebracht ist. In der Darstellung von Figur 3 befindet sich die Tastatur 30 im Arbeitsmodus, wobei ein Spiralkabel 50 mittels eines Steckers 52 noch mit dem Anschluss 48 der Tastaturhalterung 32 zu verbinden ist.

Figur 4 zeigt das Informationsgerät von Figur 3, wobei sich nunmehr die Tastatur 30 im Transportmodus befindet.

## Patentansprüche

1. System aus einer Tastaturhalterung (32) und einer Tastatur (30), wobei die Tastaturhalterung (32) U-förmig ausgebildet ist und die U-Form durch eine linke und eine rechte Seite und eine zwischen der linken und rechten Seite angeordnete Endseite gebildet ist,
**dadurch gekennzeichnet,**
**dass** die linke Seite der Tastaturhalterung (32) eine linke seitliche Führung (40) und die rechte Seite der Tastaturhalterung (32) eine rechte seitliche Führung (40) aufweisen, die mit der linken und der rechten Seite der Tastatur (30) zusammenwirken, so dass die Tastatur (30), um diese in den Transportmodus zu bringen, in die Führungen (40) eingeschoben werden kann.

2. System nach Anspruch 1,
**dadurch gekennzeichnet**,
das mindestens eine seitliche Führung (40) der Tastaturhalterung (32) eine Vertiefung (40) umfasst, in der ein seitlicher Vorsprung (38) der Tastatur (30) geführt werden kann.

3. System nach Anspruch 2,
**dadurch gekennzeichnet,**
**dass** die linke und die rechte Seite der Tastatur (30) zumindest in einem Bereich keinen seitlichen Vorsprung (38) aufweisen, der ausgeht von der Rückseite (36) der Tastatur (30).

4. System nach einem der vorhergehenden Ansprüche,
**dadurch gekennzeichnet,**
**dass** mindestens eine seitliche Führung (40) der Tastaturhalterung (32) ein erstes Haltemittel (43), vorzugsweise einen federnden Schnappmechanismus, aufweist, der ausgebildet ist, mit einem Gegenpart (45) der Tastatur (30) zusammenzuwirken, um die Tastatur (30) im Transportmodus gegen Herausrutschen aus der Tastaturhalterung (32) zu sichern.

5. System nach Anspruch 4,
**dadurch gekennzeichnet,**
**dass** das erste Haltemittel (42) so ausgebildet ist, dass dieses durch Ziehen an der Tastatur (30) in einer Richtung parallel zu den seitlichen Führungen (40) gelöst werden kann.

6. System nach einem der vorhergehenden Ansprüche,
**dadurch gekennzeichnet,**
**dass** die rechte und/oder die linke Seite der Tastatur (30) ein zweites Haltemittel, vorzugsweise einen federnden Schnappmechanismus, aufweist, der ausgebildet ist, mit einem Gegenpart der Tastaturhalterung (32) zusammenzuwirken, um die Tastatur (30) im Transportmodus gegen Herausrutschen aus der Tastaturhalterung (32) zu sichern.

7. System nach einem der Ansprüche 5 oder 6,
**dadurch gekennzeichnet,**
**dass** das erste und/oder das zweite Haltemittel einen federnd gelagerten Vorsprung (43) umfasst und der jeweilige Gegenpart eine Vertiefung (45), in die der Vorsprung (43) im Transportmodus gedrückt ist.

8. System nach einem der vorhergehenden Ansprüche,
**dadurch gekennzeichnet,**
**dass** die Tastaturhalterung (32) derart ausgebildet ist, dass, wenn sich die Tastatur (30) im Transportmodus befindet, ein Hohlraum zwischen der Tastaturhalterung (32) und der Rückseite (36) der Tastatur (30) ausgebildet wird.

9. System nach Anspruch 8,
**dadurch gekennzeichnet,**
**dass** im Bereich des Hohlraums ein Anschluss (48) vorgesehen ist zum Anschluss der Tastatur (30).

10. System nach einem der Ansprüche 8 oder 9,
**dadurch gekennzeichnet,**
**dass** der Hohlraum durch eine abnehmbare Abdeckung (46) abdeckbar ist.

11. System nach einem der vorhergehenden Ansprüche,
**dadurch gekennzeichnet,**
**dass** die Tastaturhalterung (32) ein Display (44) aufweist, das im Transportmodus der Tastatur (30) von der Tastatur (30) abgedeckt wird.

12. System nach einem der vorhergehenden Ansprüche,
**dadurch gekennzeichnet,**
**dass** die Unterseite der Tastatur (30) einen vorzugsweise mittig auf der Unterseite der Tastatur (30) angeordneten Griff (34) aufweist, mittels dessen die Tastatur (30), wenn sie sich im Transportmodus befindet, aus der Tastaturhalterung (32) gezogen werden kann.

13. System nach einem der vorhergehenden Ansprüche,
**dadurch gekennzeichnet,**
**dass** die Tastatur (30) in Querrichtung einen ersten Abschnitt mit einer ersten Breite aufweist, der im Transportmodus der Tastatur (30) mit der rechten und der linken Seite der Tastaturhalterung (32) in Kontakt ist, und einen zweiten Abschnitt mit einer zweiten Breite, die größer ist als die erste Breite, der im Transportmodus der Tastatur (30) mit der rechten und der linken Seite der Tastaturhalterung (32) nicht in Kontakt ist.

14. System nach Anspruch 13,
**dadurch gekennzeichnet,**
**dass** die Rückseite der Tastatur (30) die erste Breite aufweist.

15. System nach einem der vorhergehenden Ansprüche,
**dadurch gekennzeichnet,**
**dass** die Rückseite der Tastatur (30) mindestens ein drittes Haltemittel (41) aufweist, das mit einem vierten Haltemittel (46) der Endseite der Tastaturhalterung (32) und/ oder der Abdeckung (46) zusammenwirkt, um die Tastatur (30) im Transportmodus vor einem Herausrutschen aus der Tastaturhalterung (32) zu sichern.

16. Tastaturhalterung (32) für ein System nach einem der Ansprüche 1 bis 15.

17. Tastatur (30) für ein System nach einem der Ansprüche 1 bis 15.
